# EUROPEAN PATENT APPLICATION

(11) **EP 3 404 806 A1**
(43) Date of publication of application: **21.11.2018**
(21) Application number: 17461533.6
(22) Date of filing: 18.05.2017
(51) Int. Cl.: H02K 5/10, B60S 1/16, F16J 15/02, H02K 7/116

(54) **A SEAL FOR SEALING AN ELECTRIC MOTOR ASSEMBLY, AN ELECTRIC MOTOR ASSEMBLY COMPRISING SUCH SEAL AND A WIPER MOTOR COMPRISING SUCH THE ELECTRIC MOTOR ASSEMBLY WITH THE SEAL**

(71) Applicant: Valeo Autosystemy SP. Z.O.O., 32-050 Skawina (PL)
(72) Inventor: Orzel, Wojciech, 32-050 Skawina (PL)
(74) Representative: Callu-Danseux, Violaine

(57) **Abstract**

The invention is related to a seal for sealing an electric motor assembly, the electric motor assembly comprising an electric motor, a casing for mounting with the electric motor, and a cover for closing the casing. The seal comprises a first sealing area adapted for sealing contact with one of the electric motor, the casing, and the cover, and a second sealing area adapted for sealing contact with the other of the electric motor, the casing, and the cover, respectively. The second sealing area is arranged opposite to the first sealing area. In a cross section of the seal, the second sealing area is smaller than the first sealing area. The invention is also related to an electric motor assembly comprising such a seal. The invention is also related to a wiper motor for an automotive vehicle comprising such an electric motor assembly with the seal.

## Description

### FIELD OF THE INVENTION

The present invention is related to a seal for sealing an electric motor assembly. The present invention is related also to an electric motor assembly for a wiper motor, comprising such seal. The present invention is related further to a wiper motor for a vehicle.

A wiper system in modem vehicles comprises a wiper motor for driving at least one wiper to wipe a windscreen or a rear window of a vehicle. Such a wiper motor comprises generally an electric motor to provide movement to the wiper system, a casing comprising a gearbox for transferring the movement from the electric motor to the wiper system and a cover for closing the casing.

The wiper motor comprises a seal (called also a sealing or a gasket) positioned between the electric motor and the casing and/or between the casing and the cover for providing tight engagement between said the electric motor, the casing and the cover, respectively. Conventionally, a seal is placed in a port provided in one component of the wiper motor assembly, for example, in the cover. Sealing engagement is provided by a protrusion of the other component of the wiper motor pressing the seal with a predefined sealing pressure.

Wiper motor generates heat during its operation. The heat is dissipated into the surrounding. Components of the motor wiper need to be temperature resistant. The resistance of the wiper motor components shall be maintained in a predefined time.

The most common sealing used in a wiper motor assembly is disclosed in the French patent application No. FR 2978101. Said application discloses a seal for use in a drive motor housing. The seal is in a form of an O-ring placed in a groove provided in a cover. The O-ring is pressed with a load by the rim of the casing to provide tightening of the assembly. The O-ring seal is deformed and fills exactly the space between the cover and the casing. The space for sealing deformation has usually rectangular cross section.

As described above, the seals work in the motor assembly under permanent load. The seals from the state of the art undergo a creeping phenomenon. Creeping is a process wherein a material of the sealing, the material being under permanent tightening pressure, and, therefore, being deformed, loses gradually its elasticity. As a consequence, the seal material deforms permanently and the seal loses its sealing characteristics. Creeping depends on several factors. It has been observed that creeping depends on the material. Seals for wiper motors are made of rubber materials, usually of elastomers. Creeping for such the materials is quite fast. Another factor related to creeping is temperature. The temperature generally accelerates creeping, *i.e.,* the higher temperature the faster creeping.

Because of the above, there is still demand for a seal for wiper motor assemblies having improved resistance to creeping.

### SUMMARY OF THE INVENTION

The first aspect of the present invention provides a seal for sealing an electric motor assembly, the electric motor assembly comprising an electric motor, a casing for mounting with the electric motor and a cover for closing the casing, wherein the seal comprises a first sealing area adapted for sealing contact with one of the electric motor, the casing, and the cover, and a second sealing area adapted for sealing contact with the other of the electric motor, the casing, and the cover, respectively, the second sealing area being arranged opposite to the first sealing area, characterized in that, in a cross section of the seal, the second sealing area is smaller than the first sealing area.

The seal according to the present invention requires to apply pressure lower compared to the conventional seals to provide intended sealing of the contact between the corresponding components, thereby improving resistance of the seal to creeping.

In a preferred embodiment of the seal, one of the first sealing area and the second sealing area in the seal cross section is divided into at least two sealing subareas. Such a seal provides separate zones for sealing contact with the corresponding components, improving further resistance of the seal to creeping.

In another preferred embodiment of the seal, one of the first sealing area and the second sealing area in the seal cross section is reduced to at least one sealing point. Reducing the sealing area to the sealing point deceases further the pressure necessary to be applied to the seal to provide sealing, improving further resistance of the seal to creeping.

In yet another preferred embodiment of the seal, the seal cross section is selected from the triangular-like shape, W-like shape, semicircular-like shape, trapezoid-like shape.

Another aspect of the present invention provides an electric motor assembly comprising an electric motor, a casing for mounting with the electric motor and a cover for closing the casing, a seal arranged between the electric motor and the casing and/or between the casing and the cover for sealing the electric motor assembly, wherein the seal comprises a first sealing area, the first sealing area in a sealing contact with one of the electric motor, the casing, and the cover, and a second sealing area, the second sealing area in sealing contact with the other of the electric motor, the casing, and the cover, respectively, the second sealing area being arranged opposite to the first sealing area of the seal, characterized in that, in a cross section of the seal, the second sealing area is smaller than the first sealing area.

The seal, when assembled in the electric motor assembly according to the present invention, requires to apply lower pressure compared to the conventional seals to provide intended sealing of the contact between the corresponding components of the electric motor assembly, improving thereby the resistance of the seal to creeping.

In a preferred embodiment of the electric motor assembly, one of the first sealing area and the second sealing area in the seal cross section is divided into at least two sealing subareas. Such a seal provides separate zones for sealing contact with the corresponding components, improving further resistance of the seal to creeping.

In another preferred embodiment of the electric motor assembly, one of the first sealing area and the second sealing area in the seal cross section is reduced to at least one sealing point. Reducing the sealing area to the sealing point decreases further the pressure necessary to be applied to the seal to provide sealing, improving further resistance of the seal to creeping.

In yet another preferred embodiment of the electric motor assembly, the seal cross section is selected from the triangular-like shape, W-like shape, semicircular-like shape, trapezoid-like shape.

Yet another aspect of the present invention provides a wiper motor for an automotive vehicle comprising an electric motor assembly as specified above. The seal, when assembled in the electric motor assembly of the wiper motor according to the present invention, requires to apply lower pressure compared to the conventional seals to provide intended sealing of the contact between the corresponding components of the electric motor assembly, improving thereby resistance of the seal to creeping.

### BRIEF DESCRIPTION OF THE DRAWINGS

Further characteristics and advantages of the invention will become more apparent from the following detailed description of preferred, but not exclusive, embodiments of the invention, illustrated by way of non-limiting examples in the accompanying drawings, wherein:

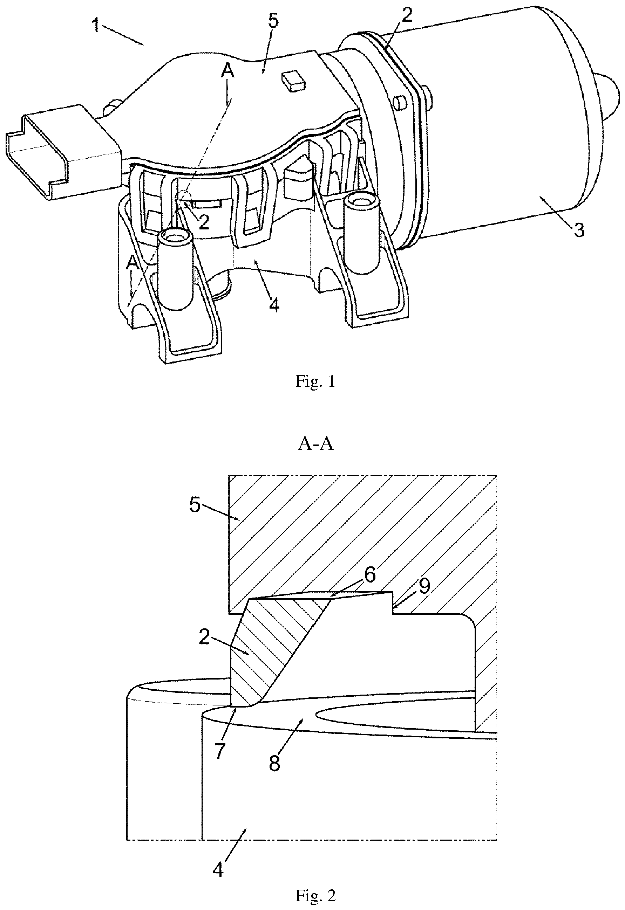

Fig. 1 shows a perspective view of a wiper motor according to the present invention.
Fig. 2. shows an enlarged perspective view of a simplified partial cross section of the detail comprising the casing and the cover assembly comprising a seal according to one preferred embodiment of the invention, taken along line A-A and indicated by the dot dashed line in fig. 1, the cross section comprising only the technical features relevant for the disclosure of the present invention for clarity,

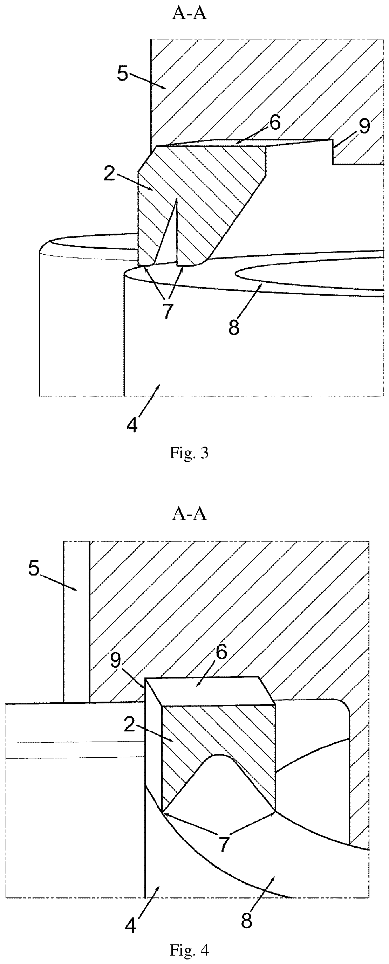

Fig. 3 shows an enlarged perspective view of a simplified partial cross section of the detail comprising the casing and the cover assembly comprising a seal according to another preferred embodiment of the invention, taken along line A-A and indicated by the dot dashed line in fig. 1, the cross section comprising only the technical features relevant for the disclosure of the present invention for clarity,
Fig. 4 shows an enlarged perspective view of simplified partial cross section of the detail comprising the casing and the cover assembly comprising a seal according to yet another preferred embodiment of the invention, taken along line A-A and indicated by the dot dashed line in fig. 1, the cross section comprising only the technical features relevant for the disclosure of the present invention for clarity.

### DETAILED DESCRIPTION OF THE PREFERRED EMBODIMENTS

Referring now to figs, and initially to figs. 2 to 4, a perspective view of the partial cross section of an electric motor assembly 1 comprising a seal 2 according to the invention is shown. The electric motor assembly 1 comprises a casing 4 and a cover 5, wherein between said casing 4 and cover 5 a seal 2 according to the invention is placed. The casing 4 of the electric motor assembly comprises a gearbox for transferring the movement from an electric motor 3 to a wiper system. The casing 4 comprises a rim 8 for contacting with the seal 2. The cover 5 closes the casing 4. The cover 5 comprises a slot 9 for accepting the seal 2, as shown in figs. 2 to 4.

The seal 2 according to the invention comprises a first sealing area 6 and a second sealing area 7, the second sealing area 7 is arranged on the opposite site of the seal 2 with respect to the first sealing area 6. In a seal cross-section, the second sealing area 7 is smaller than the first sealing area 6.

When the electric motor assembly 1 is assembled, the seal 2 is placed in the slot 9 of the cover 5, as shown in fig. 2 to 4, in such a way that its first sealing area 6 is engaged with an inner surface of the slot 9 providing sealing or tightening with said cover 5. The second sealing area 7 of the seal is engaged with the surface of the rim 8 of the casing 4, providing sealing or tightening with said casing 4.

As mentioned above, in a seal cross-section, the second sealing area 7 is smaller than the first sealing area 6. In a preferred embodiment of the seal, in its cross-section, the second sealing area 7 is 75% or less of the first sealing area 6, preferably the second sealing area 7 is 50% or less, more preferably the second sealing area 7 is 25% or less.

In a preferred embodiment, the first and the second sealing areas 6, 7 are generally parallel, as shown in fig. 2 and 3.

In one preferred embodiment of the invention, the seal 2 has the trapezoid-like cross-section, as shown in fig. 2. In another preferred embodiment the seal 2 has truncated semicircular like shape of the cross-section, wherein the rounded surface comprises the second sealing area 7, the second sealing area 7 being generally parallel to the first sealing area 6.

In another preferred embodiment of the seal, at least one of the first and the second sealing area 6, 7 is divided into two or more sealing subareas. The subareas in total of the second sealing area 7, are lower than subareas in total of the first sealing area 6, as described above. In yet another embodiment of the seal, one of the first and the second sealing area 6, 7 is divided into at least two sealing subareas. In further preferred embodiment of the invention, the seal 2 has a truncated closed W-like shape of the cross-section, as shown in fig. 3, wherein the second sealing area 7 is divided into two separate sealing subareas. In such embodiment, both second sealing subareas 7 are generally parallel to the opposite first sealing area 6.

In yet another preferred embodiment of the seal 2, the second sealing area 7 is reduced to at least one sealing point. In further preferred embodiment of the seal 2, the second sealing area 7 is reduced to two sealing points, as shown in fig. 4. In this embodiment the seal 2 has closed W-like shape of the cross section, wherein the second sealing area, as viewed in the cross section, is in form of two points arranged opposite to the first sealing area 6. In such an embodiment, the second sealing area 7 of the seal 2 is in a form of two edges extending along the seal 2. In yet another embodiment, the seal 2 has a semi-circular like cross-section. In yet another embodiment, the seal 2 has a triangular like cross-section. In such embodiments, the second sealing area 7 is in the cross section in a form of one sealing point. In other words, the second sealing area 7 of the seal is in a form of one edge extending along the length of the seal 2, the edge being opposite to the first sealing area 6.

The seal 2 according to the invention is arranged between the casing 4 and the cover 5, as described above. The cover 5 is joined with the casing with at least one joining means. Joining means are selected from the group consisting, but not exclusively, screws, bolts, rivets, snap-fits, etc. The joining means comprises also corresponding threads provided directly on the casing 4 and the cover 5, respectively, for screwing the cover 5 directly with the casing 4. The joining means provides pressure to the seal 2, required to seal or tight the seal 2 with the casing 4 and the cover 5, respectively, as described above. Due to the fact that the second sealing area 7 of the seal 2 according to the present invention is smaller than the first sealing area 6, pressure necessary to be applied to the seal 2 for sealing or tightening the casing 4 and the cover 5 of the electric motor assembly 1 is smaller compared to conventional seals, improving thereby the resistance of the seal 2 to creeping.

A material for seals for an electric motor assembly shall maintain its properties, especially elasticity, for a long time and under given working conditions. Seals are made of a rubber material, usually of a material selected from elastomers. The seal 2 according to the invention may be made of the material as used for the conventional seals. In such a case, the seal 2 maintains its sealing properties longer that the conventional seal made of the same material. On the other hand, the lowered pressure being sufficient to provide sealing or tightening the casing 4 and the cover 5 allows to use cheaper materials to manufacture the seals 2 according to the invention, which would not be used in conventional seals because such materials do not comply requirements concerning creeping under working conditions for the conventional seals.

A material for the seal 2 according to the invention is preselected basing on specific criteria. One of such criteria is the range of temperatures at which the material maintains its sealing properties for a predefined period of time. For example, but without limitation, a material is selected from elastomers having working temperatures in a range from about -40°C to about 135°C. Then the preselected material is tested for creeping at the specific temperatures from the working temperature range for a predefined time, for example, but without limitation, for about two hours. Seals in an electric motor assembly 1 in wiper motors for an automotive vehicle work mainly at an elevated temperature. Additionally, as discussed above, creeping accelerates as the temperature increases. Therefore, the material for seals 2 according to the invention is usually tested at elevated temperatures. Examples of the material for the seal 2 according to the invention includes, but without limitation, butanenitrile elastomers, ethylene propylene elastomers, hydrogenated nitrile elastomers, fluorocarbon elastomers, silicone elastomers, fluorosilicone elastomers, ethylene acrylic elastomers, for example Vamac® from DuPont, poly(tetrafluoroethylene) elastomers, for example Teflon® from DuPont.

As described above, in the electric motor assembly 1, the casing 4 comprises the rim 8 for tight engaging the seal 2 and the cover 5 comprising the slot 9 for accepting and tight engaging the seal 2. Nonetheless, alternatives and/or different configurations are possible. In one of alternative embodiment of the electric motor assembly 1, the casing 4 comprises a slot, whereas the cover 5 comprises a rim, both provided for the same purposes and having the same technical effects, as described above. In another alternative embodiment, both the casing 4 and the cover 5 comprise slots respectively, the slots being provided for the same purposes and having the same technical effect, as described above. Alternatively or additionally, at least one of the casing 4 and the cover 5 comprises equivalent positioning means for positioning the seal 2 according to the invention on the casing 4 and/or on the cover 5.

Additionally and/or alternatively the electric motor assembly 1 comprises a seal 2 according to the invention, as disclosed above, arranged between the casing 4 and the electric motor 3, as shown in fig. 1. All the preferred, additional and/or alternative features for the seal 2, the casing 4 and the cover 5 are disclosed herewith respectively for the casing 4, the electric motor 3 and the seal 2 arranged between said casing 4 and said electric motor 3.

The present invention is related further to a wiper motor, the wiper motor comprising an electric motor assembly 1, as shown in fig. 1. The wiper motor comprises an electric motor 3 for providing movement to a wiper system, a casing 4 engaged with the electric motor 3 and a cover 3 mounted with the casing 5. The casing 4 comprises, for example, a gear box for transferring the movement from the electric motor 3 to the wiper system, wiring for powering the electric motor 3. In one of the preferred embodiments the cover 5 is assembled with the casing 4 by snap fits, as shown in fig. 1. The wiper motor comprises further means for mounting the wiper motor in a wiper system in an automotive vehicle. In one embodiment of the invention, the seal 2 is arranged between the casing 4 and the cover 5, as described above. In another embodiment of the invention, the seal 2 is arranged between the casing 4 and the electric motor 3, as described above. In yet another embodiment of the invention, one seal 2 is arranged between the casing 4 and the cover 5, whereas another seal 2 is arranged between the casing 4 and the electric motor 3.

The invention, especially its preferred embodiments, is described herein by the way of example only. All the technical features, including those in the preferred embodiments, as described herein, may be combined to any extent and in any combination. All the possible combinations of the technical features are considered as being fully and unambiguously disclosed herein as complete and unequivocal individual embodiments of the present invention.

Although the present invention has been described in the context of an electric motor and a wiper motor for an automotive vehicle, the seal according to the present invention may be used in any application wherein creeping of a seal is considered to be one the important or crucial issue.

As described hereinabove, the present invention solves the problem of creeping of the seals for an electric motor assembly for a wiper motor known in the state of the art. It should be appreciated that various changes in the components and arrangements, which have been described and illustrated herein in order to explain the nature of the invention, may be made by these skilled in the art without departing from the principle and scope of the invention, as defined in the appended claims.

### Definitions

- 1: an electric motor assembly
- 2: a seal
- 3: an electric motor
- 4: a casing
- 5: a cover for the casing 4
- 6: a first sealing area of the seal 2
- 7: a second sealing area of the seal 2
- 8: a rim of the casing 4
- 9: a slot in the cover 5 for the seal 2

## Claims

1. A seal (2) for sealing an electric motor assembly (1), the electric motor assembly comprising an electric motor (3), a casing (4) for mounting with the electric motor (3) and a cover (5) for closing the casing (4),
wherein the seal (2) comprises a first sealing area (6) adapted for sealing contact with one of the electric motor (3), the casing (4), and the cover (5), and a second sealing area (7) adapted for sealing contact with the other of the electric motor (3), the casing (4), and the cover (5), respectively, the second sealing area (7) being arranged opposite to the first sealing area (6),
**characterized in that,**
in a cross section of the seal (2), the second sealing area (7) is smaller than the first sealing area (6).

2. The seal (2) according to claim 1, wherein one of the first sealing area (6) and the second sealing area (7) in the seal cross section is divided into at least two sealing subareas.

3. The seal (2) according to claim 1 or 2, wherein one of the first sealing area (6) and the second sealing area (7) in the seal cross section is reduced to at least one sealing point.

4. The seal (2) according to claim 1, wherein the seal cross section is selected from the triangular-like shape, W-like shape, semicircular-like shape, trapezoid-like shape.

5. An electric motor assembly (1) comprising
an electric motor (3),
a casing (4) for mounting the electric motor (3),
a cover (5) for closing the casing (4), and
a seal (2) arranged between the electric motor (3) and the casing (4) and/or between the casing (4) and the cover (5) for sealing the electric motor assembly (1),
wherein the seal (2) comprises a first sealing area (6), the first sealing area (7) in a sealing contact with one of the electric motor (3), the casing (4), and the cover (5), and a second sealing area (7), the second sealing area (6) in a sealing contact with the other of the electric motor (3), the casing (4), and the cover (5), respectively, the second sealing area (7) being arranged opposite to the first sealing area (6) of the seal,
**characterized in that,**
in a cross section of the seal (2), the second sealing area (7) is smaller than the first sealing area (6).

6. The electric motor assembly (1) according to claim 5, wherein at least one of the first sealing area (6) and the second sealing area (7) in the seal cross section is divided into at least two sealing subareas.

7. The electric motor assembly (1) according to claim 5 or 6, wherein one of the first sealing area (6) and the second sealing area (7) in the seal cross section is reduced to at least one sealing point.

8. The electric motor assembly (1) according to claim 5, wherein the seal cross section is selected from the triangular-like shape, W-like shape, semicircular-like shape, trapezoid-like shape.

9. A wiper motor for an automotive vehicle comprising an electric motor assembly as specified in any of claims 5 to 8.
